# EUROPÄISCHE PATENTANMELDUNG

(11) **EP 2 395 637 A2**
(43) Veröffentlichungstag der Anmeldung: **14.12.2011**
(21) Anmeldenummer: 11166933.9
(22) Anmeldetag: 20.05.2011
(51) Int. Cl.: H02K 23/66

(54) **Gleichstromaktuator und Vorrichtung zur Erkennung einer Stellbewegung eines Gleichstromaktuators**

(30) Priorität: 09.06.2010 DE 102010029849
(71) Anmelder: Behr GmbH & Co. KG, 70469 Stuttgart (DE)
(72) Erfinder: Dahm, Christoph, 71394, Kernen i.R. (DE); Krapf, Ute, 70329, Stuttgart (DE)
(74) Vertreter: Grauel, Andreas

(57) **Zusammenfassung**

Die vorliegende Erfindung betrifft einen Gleichstromaktuator, mit einem Rotor (104) mit einer Wicklung (110) die zwischen einem ersten Anschluss und einem zweiten Anschluss eines Kommunikators (106) geschaltet ist, wobei eine Stellbewegung des Gleichstromaktuators abhängig von einer Drehung des Rotors (104) ist. Der Gleichstromaktuator weist Schleifkontakte (122, 124) zum Bereitstellen eines Gleichstroms für die Wicklung (110) und einen weiteren Schleifkontakt (132) zum Abgreifen einer an dem ersten Anschluss oder dem zweiten Anschluss anliegenden Spannung auf. Ein Auswerteanschluss (130) ist elektrisch leitend mit dem dritten Schleifkontakt (132) verbunden, um ein Auswertesignal bereitzustellen, das eine von der Drehung des Rotors (104) abhängige Taktrate aufweist.

## Beschreibung

Die vorliegende Erfindung bezieht sich auf eine Vorrichtung zur Erkennung einer SteHbewegung eines Gleictistromaktuators sowie auf einen Gleichstromaktuator, der beispielsweise zum Betrieb einer Klimaklappe einer Klimaanlage eingesetzt werden kann.

Bei DC-Aktuatoren wird zur Positionserkennung mittels des Aktuatorgetriebes ein zusätzliches Potentiometer angetrieben. Das Potentiometer muss mit einer eigenen Versorgungsspannung betrieben werden, wodurch sich ein erhöhter Verkabelungsaufwand ergibt. Alternativ kann eine relative Positionsrückmeldung über eine Pulszählung bei DC-Aktuatoren erfolgen, die jedoch ungenau ist. Eine relative Positionsrückmeldung kann auch mittels eines Schrittschaltwerks, wie einem Stepper oder einem LIN-Stepper, erfolgen. Dies ist jedoch aufgrund der erforderlichen Verkabelung sowie dem Preis eines erforderlichen ASICs kostenintensiv.

Die WO 2006/111144 A1 beschreibt ein Verfahren zur Ermittlung der aktuellen Position eines Rotors eines Elektromotors, indem der aktuelle Wert des Ankerwiderstandes des Elektromotors zeitlich kontinuierlich ermittelt und die aktuelle Position des Rotors des Elektromotors anhand des aktuellen Wertes des Ankerwiderstandes ermittelt wird.

Es ist die Aufgabe der vorliegenden Erfindung eine verbesserte Vorrichtung zur Erkennung einer Stellbewegung eines Gleichstromaktuators sowie einen verbesserten Gleichstromaktuator zu schaffen.

Diese Aufgabe wird durch eine Vorrichtung zur Erkennung einer Stellbewegung eines Gleichstromaktuators sowie einen Gieichstromaktuator gemäß den unabhängigen Ansprüchen gelöst.

Der vorliegenden Erfindung liegt die Erkenntnis zugrunde, dass sich mittels eines zusätzlichen Abgriffe an einem Rotor des Gleichstrormaktuators ein Frequenzsignal erzeugen lässt, dessen Frequenz durch eine Drehrate des Rotors bestimmt wird.

Der erfindungsgemäße Ansatz kann vorteilhaft bei Aktuatoren zum Betrieb von Klimaklappen eingesetzt werden, die zu Regelungs- und Steuerzwecken eine Rückmeldung über ihre aktuelle Position benötigen. Erfindungsgemäß ist eine kostengünstige und robuste Rückmeldung der Klappenposition im Aktuator bei verringertem Aufwand der Verkabelung bzw. Spannungsbereitstellung realisierbar. Damit gehen geringe Systemkosten einher. Es wird eine sichere relative Positionserkennung ohne Potentiometer und ohne Verkabelungsaufwand ermöglicht. Somit entfällt eine sonst erforderliche Bereitstellung der Potentiometerversorgung durch die auswertende Steuereinheit für DC-Aktuatoren.

Die vorliegende Erfindung schafft einen Gleichstromaktuator, mit folgenden Merkmalen:
einem Rotor mit einer Wicklung die zwischen einem ersten Anschluss und einem zweiten Anschluss eines Kommunikators geschaltet ist, wobei eine Stellbewegung des Gleichstromaktuators abhängig von einer Drehung des Rotors ist; einem ersten Schleifkontakt und einem zweiten Schleifkontakt zum Bereitstellen eines Gleichstroms für die Wicklung, wobei der erste Schleifkontakt bei einer Drehung des Rotors abwechselnd mit dem ersten Anschluss und dem zweiten Anschluss und der zweite Schleifkontakt bei der Drehung des Rotors abwechselnd mit dem jeweils anderen des ersten Anschluß und des zweiten Anschluss elektrisch leitend verbunden ist;
einem dritten Schleifkontakt zum Abgreifen einer an dem ersten Anschluss oder dem zweiten Anschluss anliegenden Spannung, wobei der dritte Schleifkontakt bei der Drehung des Rotors abwechselnd mit dem ersten Anschluss und dem zweiten Anschluss elektrisch leitend verbunden ist; und
einem Auswerteanschluss, der elektrisch leitend mit dem dritten Schleifkontakt verbunden ist, um ein Auswertesignal bereitzustellen, das eine von der Drehung des Rotors abhängige Taktrate aufweist. Somit kann die erfindungsgemäße Vorrichtung zur Erkennung einer Stellbewegung eines Gleichstromaktuators vorteilhaft in einem Gleichstromaktuator umgesetzt werden.

Der Gleichstromaktuator kann auf einem Gleichstrommotor basieren. Der Rotor kann drehbar in einem Stator gelagert sein. Eine Drehbewegung des Rotors des Gleichstrommotors kann über ein Aktuatorgetriebe auf eine Steileinrichtung Übertragen werden, die ansprechend auf die Drehbewegung des Rotors die Stellbewegung ausführen kann. Die Schleifkontakte können als Bürsten ausgeführt sein. Der erste Anschluss ist von dem zweiten Anschluss durch eine elektrische Isolierung getrennt. Der erste und der zweite Schleifkontakt können so angeordnet sein, dass der erste Schleifkontakt den ersten Anschluss kontaktiert, wenn der zweite Schleifkontakt den zweiten Schleifkontakt kontaktiert, und umgekehrt. Bei einer gleichgerichteten Drehung des Rotors kontaktiert der dritte Schleifkontakt zeitlich aufeinanderfolgend den ersten Anschluss, die Isolierung, den zweiten Anschluss, die Isolierung, den ersten Anschluss, die Isolierung, den zweiten Anschluss, usw. Wenn der dritte Schleifkontakt nicht gerade die Isolierung kontaktiert, ist der dritte Schleifkontakt über den Kommutator entweder mit dem ersten Schleifkontakt oder mit dem zweiten Schleifkontakt verbunden. Somit kann das Auswertesignal eine über den ersten Schleifkontakt oder eine über den zweiten Schleifkontakt bereitgestellte Spannung aufweisen, die unterbrochen ist, wenn der dritte Anschluss die Isolierung kontaktiert.

Gemäß einer Ausführungsform kann der erste Anschluss des Kommunikators eine erste Anschlussfläche und eine erste Abgriffsfläche und der zweite Anschluss des Kommunikators eine zweite Anschlussfläche und eine zweite Abgriffsfläche aufweisen. Dabei kann der erste Schleifkontakt bei der Drehung des Rotors abwechselnd mit der ersten Anschlussfläche und der zweiten Anschlussfläche, der zweite Schleifkontakt bei der Drehung des Rotors abwechselnd mit der jeweils anderen der ersten Anschlussfläche und der zweiten Anschlussfläche und der dritte Schleifkontakt bei der Drehung des Rotors abwechselnd mit der ersten Abgriffsfläche und der zweiten Abgriffsfläche elektrisch leitend verbunden sein. Die Anschlussflächen und die Abgriffstlächen können benachbart zueinander angeordnet sein und ineinander übergehen. Alternativ können die Anschlussflächen und die Abgriffsflächen getrennt voneinander angeordnet sein und demnach beispielsweise unterschiedliche Hauptersireckungsrichtungen oder Haupterstreckungsebenen aufweisen. Auch können Isolationsflächen zwischen der ersten und der zweite Anschlussfläche sowie zwischen der ersten und der zweiten Abgriffsfläche unterschiedlich groß ausgeführt sein.

Auch kann der Kommutator eine erste Scheibe mit der ersten Anschlussfläche und der zweiten Anschlussfläche und eine zweite Scheibe mit der ersten Abgriffsfläche und der zweiten Abgriflsfläche aufweisen. Die erste Scheibe und die zweite Scheibe können an unterschiedlichen Positionen einer Rotorwelle des Rotors angeordnet und durch einen Zwischenraum voneinander beabstandet sein. Auf diese Weise können der erste und der zweite Schleifkontakt räumlich von dem dritten Schleifkontakt angeordnet sein.

Gemäß einer Ausführungsform kann der Gleichstromaktuator eine Diode aufweisen, wobei die Anode der Diode mit dem dritten Schleifkontakt und die Kathode der Diode mit dem Auswerteanschluss elektrisch leitend verbunden sind. Durch die Diode kann ein Rückfluss eines Stroms in die Wicklung verhindert werden.

Ferner kann der Gleichstromaktuator einen vierten Schleifkontakt zum Abgreifen der an dem ersten Anschluss oder dem zweiten Anschluss anliegenden Spannung aufweisen. Dabei kann der vierte Schleifkontakt bei der Drehung des Rotors in Bezug auf den dritten Schleifkontakt abwechselnd mit dem jeweils anderen des ersten Anschluss und des zweiten Anschluss elektrisch leitend verbunden sein. Der Gleichstromaktuator kann ferner eine weitere Diode aufweisen, wobei die Anode der weiteren Diode mit dem vierten Schleifkontakt und die Kathode der weiteren Diode mit dem Auswerteanschluss elektrisch leitend verbunden ist. Auf diese Weise kann das Auswertesignal unabhängig von der Drehrichtung des Rotors bereitgestellt werden.

Der Gleschstromaktuator kann ferner eine Koppeleinrichtung zum Koppeln des Rotors mit einer Stellklappe einer Klimaanlage eines Fahrzeugs aufweisen. Somit kann die Stellbewegung auf die Stellklappe wirken. Basierend auf dem Auswertesignal kann eine Stellposition der Klimaklappe bestimmt werden. Somit lässt sich der erfindungsgermäße Ansatz vorteilhaft beim Betrieb von Klimaklappen einsetzen. Eine Kenntnis der Stellposition der Stellklappe kann für eine Regelung oder Steuerung der Klimaanlage erforderlich sein.

Die vorliegende Erfindung schafft ferner eine Vorrichtung zur Erkennung einer Stellbewegung eines Gleichstromaktuators, der einen Rotor mit einem Kommutator und einer Wicklung, die zwischen einem ersten Anschluss und einem zweiten Anschluss des Kommutators geschaltet ist, und einen ersten Schleifkontakt und einen zweiten Schleifkontakt zum Bereitstellen eines Gleichstroms für die Wicklung aufweist, wobei die Stellbewegung des Gleichstromaktuators abhängig von einer Drehung des Rotors ist und der erste Schleifkontakt bei einer Drehung des Rotors abwechselnd mit dem ersten Anschluss und dem zweiten Anschluss und der zweite Schleifkontakt bei der Drehung des Rotors abwechselnd mit dem jeweils anderen des ersten Anschluss und des zweiten Anschluss elektrisch leitend verbunden ist, mit folgenden Merkmalen:
einem dritten Schleifkontakt zum Abgreifen einer an dem ersten Anschluss oder dem zweiten Anschluss anliegenden Spannung, wobei der dritte Schleifkontakt bei der Drehung des Rotors abwechselnd mit dem ersten Anschluss und dem zweiten Anschluss elektrisch leitend verbunden ist; und
einem Auswerteanschluss, der elektrisch leitend mit dem dritten Schleifkontakt verbunden ist, um ein Auswertesignal bereitzustellen, das eine von der Drehung des Rotors abhängige Taktrate aufweist.

Die erfindungsgemäße Vorrichtung kann eine Auswerteeinnchtung aufweisen, die ausgebildet ist, um basierend auf der Taktrate des Auswertesignals eine Information über die Stellbewegung zu bestimmen. Beispielsweise kann die Auswerteeinnchtung ausgebildet sein, um steigende oder fallende Signalflanken des Auswertesignals zu erkennen und aufzuaddieren. Beispielsweise können zwei aufeinanderfolgende Signalflanken einen vorbestimmten Abschnitt der Stellbewegung, beispielsweise eine Streckenabschnitt oder einen Winkelabschnitt definieren. Auf diese Weise kann eine Relativbewegung des Aktuators bestimmt werden.

Dabei kann die Auswerteeinrichtung ausgebildet sein, um basierend auf der Information über die Stellbewegung und einer vorangegangenen Stellposition des Gleiehstromaktuators eine aktuelle Stellposition zu bestimmen. Die aktuelle Stellposition kann jeweils gespeichert werden, um nachfolgend zur Verfügung zu stehen. Somit kann die aktuelle Position basierend auf der bekannten vorangegangenen Stellposition und einer aus dem Auswertesignal bestimmten Relativbewegung bestimmt werden.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines erfindungsgemäßen Gleichstromaktuators; und
- Fig. 2: eine weitere schematische Darstellung eines erfindungsgemäßen Gleichstromaktuators.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

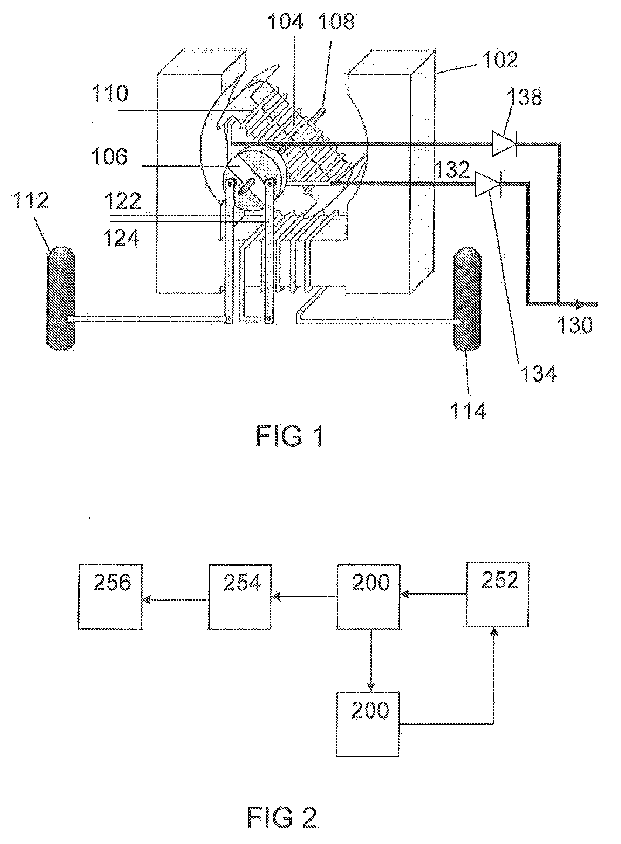

Fig. 1 zeigt einen Gleichstromaktuator, gemäß einem Ausführungsbeispiel der vorliegenden Erfindung. Der Gleichstromaktuator weist einen Stator 102 und einen Anker oder Rotor 104 eines Elektromotors auf. Der Rotor 104 ist starr mit einem Kommutator 106 verbunden. Der Rotor 104 und der Kommutator 106 sind über eine Rotorwelle 108 drehbar gelagert, Der Rotor 104 weist eine Wicklung auf, durch die ein elektrischer Strom fließen kann. Somit bildet der Rotor 104 einen Kern einer elektrischen Spule. Der Gleichstromaktuator weist eine erste Anschlussklemme 112 zum Bereitstellen eines ersten Spannungspotentials und eine zweite Anschlussklemme 114 zum Bereitstellen eines zweiten Spannungspotentials auf. Die erste Anschlussklemme 112 ist über eine erste Bürste 122 und die zweite Anschlussklemme 114 ist über eine zweite Bürste 124 mit dem Kommutator 106 verbunden. Der Kommutator 106 weist zwei Anschlussflächen auf, die durch einen Isolator voneinander getrennt sind. Die Anschlussflächen sind als zwei Halbkreissegmente ausgebildet, zwischen denen der Isolator angeordnet ist, In der in Fig. 1 gezeigten Stellung befinden sich die erste Bürste im Bereich der ersten Anschlussfläche und die zweite Bürste im Bereich der zweiten Anschlussfläche. Auf diese Weise kann ein Stromfluss von der ersten Anschlussklemme, 112, über die erste Bürste 122 und die erste Anschlussfläche in die Wicklung hinein, durch die Wicklung hindurch, aus der Wicklung heraus und über die zweite Anschlussfläche und die zweite Bürste 124 zur zweiten Anschlussklemme 114 erfolgen. Befindet sich der Kommutator 106 in einer Stellung, in der die Bürsten 122, 124 dem Isolator gegenüberstehen, so stellt sich an den Anschlussflächen jeweils das gleiche Spannungspotential eine das sich typischerweise von dem Spannungspotential der ersten Anschlussklemme 112 und dem Spannungspotential der zweiten Anschlussklemme 114 unterscheidet. Dreht sich der Rotor 104 weiter, so kann der Strom von der ersten Anschlussklemme 112, die erste Bürste, die zweite Anschlussfläche, die Wicklung, die erste Anschlussfläche und durch die zweite Bürste zur zweiten Anschlussklemme fließen.

Der Gleichstromaktuator weist einen Auswerteanschluss 130 auf. Im Betrieb des Gleichstromaktuators stellt der Auswerteanschluss 130 ein elektrisches Signal bereit, mittels dem sich eine Drehbewegung oder Drehzahl des Rotors 104 erkennen lässt. Dazu kann der Gleichstromaktuator einen Schleifkontakt 132 aufweisen, der über eine Diode 134 mit dem Auswerteanschluss 130 verbunden ist. Der Schleifkontakt 132 ist mit dem Kommutator 106 verbunden. Je nach Stellung des Rotors 104 ist der Schleifkontakt 132 entweder elektrisch leitenden mit der ersten Anschlussfläche des Kommutator 106, der zweiten Anschlussfläche des Kommutator 106 oder mit dem Isolator des Kommutators 106 verbunden. Dabei kann der Schleifkontakt 132 jeweils direkt an der ersten oder zweiten Anschlussfläche anliegen oder aber an weiteren Anschlussflächen anliegen, die räumlich von der ersten und zweiten Anschlussfläche getrennt angeordnet sind, jedoch eine elektrische Verbindung zu der ersten und zweiten Anschlussfläche aufweisen. Beispielsweise können weitere Anschlussflächen auf einem zweiten Kommutator angeordnet sein.

Gemäß diesem Ausführungsbeispiel weist der Gleichstrotromaktuator einen weiteren Schleifkontakt 136 auf, der über eine weitere Diode 138 mit dem Auswerteanschluss 130 verbunden ist. Der weitere Schleifkontakt 136 ist mit dem Kommutator 106 verbunden. Je nach Stellung des Rotors 104, ist der weitere Schleifkontakt 136 entweder elektrisch leitenden mit der ersten Anschlussfläche des Kommutator 106, der zweiten Anschlussfläche des Kommutator 106 oder mit dem Isolator des Kommutators 106 verbunden. Ist der Schleifkontakt 132 elektrisch leitend mit der ersten Anschfussfläche verbunden, so ist der weitere Schleifkontakt 136 elektrisch leitend mit der zweiten Anschlussfläche verbunden, und umgekehrt.

Die Bürsten 122, 124 sowie die Schleifkontakte 132, 136 sind im Bezug auf den Stator 102 starr angeordnet, so dass sich der Rotor 104 in Bezug auf den Stator 102 und die Bürsten 122, 124 sowie die Schleifkontakte 132, 136 bewegt, Gemäß einem Ausführungsbeispiel stehen die Schleifkontakte 132, 136 jeweils Abgriffe über einen zweiten, nicht gezeigten, Kommutator dar.

Der Auswerteanschluss 130 kann mit einer Auswerteeinrichtung, beispielsweise in Form eines Zählers, eines Bediengeräts oder Steuergeräts mit einem Frequenzeingang, verbunden sein.

Somit ist eine Positionserkennung eines DC-Aktuators ohne Poientiometerrückmeldung möglich. Beispielsweise benötigen Aktuatoren zum Betrieb von Klimaklappen zu Regelungs- und Steuerzwecken eine Rückmeldung über ihre aktuelle Position.

Erfindungsgemäß erfolgt dazu eine Einbringung eines zusätzlichen Abgriffs, beispielsweise des in Fig. 1 gezeigten Abgriffs 132 am Kommutator. Dazu kann ein zusätzlicher Kommutator oder eine "Signalscheibe" vorgesehen sein. An diesem Abgriff entsteht ein Frequenzsignal analog zur Geschwindigkeit des Aktuators. Das Rücklesen dieser Frequenz durch eine Steuereinheit ergibt gleichzeitig das Positionssignal des Motors. Eine Versorgungsspannung durch die Steuereinheit ist nicht notwendig, da der Abgriff innerhalb des Aktuators fest verdrahtet werden kann.

Optional ist ein Aufbau mit zwei Dioden 134, 138 möglich, um bei rechtslinkslauf ein immer gleiches Spannungsrückmeldesignal sicherzustellen. Aufgrund der hohen Spannungsdifferenz ist eine robuste Rücklesung im Steuergerät möglich.

Fig. 2 zeigt eine schematische Darstellung eines Gleichstromaktuators, gemäß einem Ausführungsbeispiel der vorliegenden Erfindung. Der Gleichstromaktuator weist einen Gleichstrommotor 200 auf, der den in Fig. 1 gezeigten Aufbau aufweisen kann. Der Gleichstrommotor 200 wird von einer Steuerung 252 angesteuert. Die Steuerung 252 ist ausgebildet, um eine Drehgeschwindigkeit oder Drehzahl des Gleichstrommotors 200 zu steuern. Zusätzlich kann die Steuerung 252 ausgebildet sein, um eine Drehrichtung des Gleichstrommotors zu steuern. Dazu kann die Steuerung ausgebildet sein, um eine Stromstärke und eine Stromrichtung an den Anschlussklemmen des Gleichstrommotors zu regeln. Die Rotorwelle des Gleichstrommotors 200 kann über ein Getriebe 254 mit einem Stellglied 256, beispielsweise einer Klimaklappe gekoppelt sein. Eine Drehung des Rotors bewirkt somit eine Stellbewegung des Stellglieds 256. Die Steuerung 252 ist ausgebildet, um den Gleichstrommotor 200 so anzusteuern, dass das Stellglied 256 eine gewünschte Bewegung ausführt. Dazu ist der Gleichstrommotor 200 mit einer Auswerteeinrichtung 258 verbunden. Die Auswerteeinrichtung 258 ist ausgebildet, um über einen Auswerteanschluss des Gleichstrommotors 200 das in Fig. 1 beschriebene Auswertesignal zu empfangen und daraus eine Drehbewegung oder Drehzahl des Gleichstrommotors 200 zu ermitteln. Beispielsweise kann die Auswerteeinrichtung 258 ausgebildet sein, um aufeinanderfolgende Impulse oder Flanken des Auswertesignals zu erkennen und auszuwerten. Die Auswerteeinrichtung 258 kann ausgebildet sein, um jeden erkannten Impuls oder jede erkannte Flanke mit einer Information über eine Drehbewegung des Gleichstrommotors 200 zu verknüpfen und die entsprechende Information an die Steuerung 252 auszugeben. Beispielsweise kann die Auswerteeinrichtung 258 ausgebildet sein, um pro erkannten Impuls eine Information auszugeben, die anzeigt, dass sich die Rotorwelle um eine halbe oder eine vollständige Umdrehung gedreht hat. Um einen Wechsel in der Drehrichtung des Gleichstrommotors 200 zu erkennen, kann die Auswerteeinrichtung 258 eine Information über eine Polarität der an den Gleichstrommotor 200 bereitgestellten Betriebsspannung empfangen.

Die beschriebenen Ausführungsbeispiele sind nur beispielhaft gewählt und können miteinander kombiniert werden.

## Patentansprüche

1. Vorrichtung zur Erkennung eher Stellbewegung eines Gleichstromaktuators, der einen Rotor (104) mit einem Kommutator (106) und einer Wicklung (110), die zwischen einem ersten Anschluss und einem zweiten Anschluss des Kommutators geschadet ist, und einen ersten Schleifkontakt (122) und einen zweiten Schleifkontakt (124) zum Bereitstellen eines Gleichstroms für die Wicklung aufweist, wobei die Stellbewegung des Gleichstromaktuators abhängig von einer Drehung des Rotors ist und der erste Schleifkontakt bei einer Drehung des Rotors abwechselnd mit dem ersten Anschluss und dem zweiten Anschluss und der zweite Schleifkontakt bei der Drehung des Rotors abwechselnd mit dem jeweils anderen des ersten Anschluss und des zweiten Anschluss elektrisch leitend verbunden ist, mit folgenden Merkmalen:
einem dritten Schleifkontakt (132) zum Abgreifen einer an dem ersten Anschluss oder dem zweiten Anschluss anliegenden Spannung, wobei der dritte Schleifkontakt bei der Drehung des Rotors abwechselnd mit dem ersten Anschluss und dem zweiten Anschluss elektrisch leitend verbunden ist; und
einem Auswerteanschluss (130), der elektrisch leitend mit dem dritten Schleifkontakt verbunden ist, um ein Auswertesignal bereitzustellen. das eine von der Drehung des Rotors abhängige Taktrate aufweist.

2. Vorrichtung gemäß Anspruch 1, mit einer Auswerteeinrichtung (258), die ausgebildet ist, um basierend auf der Taktrate des Auswertsignals eine Information über die Stellbewegung zu bestimmen.

3. Vorrichtung gemäß Anspruch 2, bei dem die Auswerteeinrichtung (258) ausgebildet ist, um basierend auf der Information über die Stellbewegung und einer vorangegangenen Stellposition des Gleichstromaktuators eine aktuelle Stellposition zu bestimmen.

4. Vorrichtung gemäß einem der Ansprüche 1 bis 3, wobei eine Taktperiode der Taktrate des Auswertesignals durch eine halbe oder eine ganze Umdrehung des Rotors (104) bestimmt ist.

5. Gleichstromaktuator, mit folgenden Merkmalen:
einem Rotor (104) mit einer Wicklung (110) die zwischen einem ersten Anschluss und einem zweiten Anschluss eines Kommunikators (106) geschaltet ist, wobei eine Stellbewegung des Gleichstromaktuators abhängig von einer Drehung des Rotors ist;
einem ersten Schleifkontakt (122) und einem zweiten Schleifkontakt (124) zum Bereitstellen eines Gleichstroms für die Wicklung, wobei der erste Schleifkontakt bei einer Drehung des Rotors abwechselnd mit dem ersten Anschluss und dem zweiten Anschluss und der zweite Schleifkontakt bei der Drehung des Rotors abwechselnd mit dem jeweils anderen des ersten Anschluss und des zweiten Anschluss elektrisch leitend verbunden ist;
einer Vorrichtung (132, 130) zur Erkennung einer Stellbewegung eines Gleichstromaktuators, gemäß, einem der Ansprüche 1 bis 4.

6. Gleichstromaktuator gemäß Anspruch 5, bei dem der erste Anschluss eine erste Anschlussfläche und eine erste Abgriffsfläche und der zweite Anschluss eine zweite Anschlussfläche und eine zweite Abgriffsfläche aufweist und wobei der erste Schleifkontakt (122) bei der Drehung des Rotors (104) abwechselnd mit der ersten Anschlussfläche und der zweiten Anschlussfläche, der zweite Schleifkontakt (124) bei der Drehung des Rotors abwechselnd mit der jeweils anderen der ersten Anschlussfläche und der zweiten Anschlussfläche und der dritte Schleifkontakt bei der Drehung des Rotors abwechselnd mit der ersten Abgriffsfläche und der zweiten Abgriffsfläche elektrisch leitend verbunden sind.

7. Gleichstromaktuator gemäß Anspruch 6, bei dem der Kommutator (106) eine erste Scheibe mit der erste Anschlussfläche und der zweiten Anschlussfläche und eine zweite Scheibe mit der ersten Abgriffsfläche und der zweiten Abgriffsfläche aufweist.

8. Gleichstromaktuator gemäß einem der Ansprüche 5 bis 7, mit einer Diode (134), wobei die Anode der Diode mit dem dritten Schleifkontakt (132) und die Kathode der Diode mit dem Auswerteanschluss (130) elektrisch leitend verbunden ist.

9. Gleichstromaktuator gemäß Anspruch 8, mit einem vierten Schleifkontakt (136) zum Abgreifen der an dem ersten Anschluss oder dem zweiten Anschluss anliegenden Spannung, wobei der vierte Schleifkontakt bei der Drehung des Rotors (104) in Bezug auf den dritten Schleifkontakt abwechselnd mit dem jeweils anderen des ersten Anschluss und des zweiten Anschluss elektrisch leitend verbunden ist und mit einer weiteren Diode (138), wobei die Anode der weiteren Diode mit dem vierten Schleifkontakt und die Kathode der weiteren Diode mit dem Auswerteanschluss elektrisch leitend verbunden ist.

10. Gieichstromaktuator gemäß einem der Ansprüche 5 bis 9, mit einer Koppeleinrichtung (254) zum Koppeln des Rotors (104) mit einer Stellklappe (256) einer Klimaanlage eines Fahrzeugs, so dass die Stellbewegung auf die Stellklappe wirkt, und wobei basierend auf dem Auswertesignal eine Stellposition der Klimaklappe bestimmt werden kann.
